# EUROPEAN PATENT SPECIFICATION

(11) **EP 2 572 261 B1**
(45) Date of publication and mention of the grant of the patent: **06.11.2019**
(21) Application number: 11784015.7
(22) Date of filing: 16.05.2011
(51) Int. Cl.: G06F 3/041, B60K 37/02, B60H 1/00, B60K 35/00, B60K 37/06, G06F 3/0488, G06F 3/0484

(54) **CONTROL DIAL METHOD AND APPARATUS**
WAHLSTEUERUNGSVERFAHREN UND VORRICHTUNG
PROCÉDÉ ET APPAREIL DE CADRAN DE RÉGLAGE

(30) Priority: 17.05.2010 US 345333 P
(43) Date of publication of application: 27.03.2013
(73) Proprietor: BCS Automotive Interface Solutions US LLC, Wilmington DE 19808 (US)
(72) Inventor: KULCZYCKI, Jeffrey, Plymouth MI 48170 (US)
(74) Representative: Prinz & Partner mbB
(86) International application number: PCT/US2011/036596
(87) International publication number: WO 2011/146362

(56) References cited:
- DE-A1-102005 033 923
- DE-A1-102007 050 177
- JP-A- 2009 054 113
- KR-A- 20080 113 667
- KR-A- 20100 011 459
- US-A1- 2010 049 835
- US-A1- 2010 052 937

## Description

### Technical Field

The present invention relates to a control dial and is particularly directed to a touch-type control dial method and apparatus.

### Background

Control knobs or dials, and, in particular, mechanical rotary control knobs and. dials are known. Such rotary control knobs and dials are mechanically turnable and control things from a simple ON/OFF function of an end-use device, to the selection of specific items such as selection of a television or radio station. Some control knobs or dials are used to provide, what is referred to &S, ELS 3'Ω. infinitely controlled function such as the volume of a radio. Such mechanical rotary control knobs and dials have been found in many vehicle control applications such as radio systems and environmental control systems such as heating, ventilation, and air conditioning ("HVAC") systems.

JP 2009 054113 A describes a portable electronic apparatus which allows a plurality of selection operation controls based on a movement operation and is capable of extending the range of operability.

DE 10 2007 050 177 A1 describes an input device that includes a scroll unit installed on a case and configured to select a menu.

DE 10 2005 033 923 A1 shows a circular operating element with sensor segments arranged circumferentially around a display, wherein by actuation of the sensor segments a temperature in a vehicle can be changed and wherein a set temperature is displayed on the display.

### Summary of the Invention

In accordance with one aspect of the present invention, a circular control dial according to claim 1 is provided.

In accordance with another aspect of the present invention, a method for controlling an end user device according to claim 7 is provided.

### Brief Description of the Drawings

The foregoing and other features and advantages of the present invention will become apparent to those skilled in the art to which the present invention relates upon reading the following description with reference to the accompanying drawings, in which:
Fig, 1 is a perspective view of a touch-type control panel in a vehicle having a driver and passenger control dials made in accordance with one example embodiment of the present invention;
Figs. 2-7 depict a control dial made in accordance with the one embodiment of the present invention showing different possible control movements on the operator's finger on the dial; and
Fig. 8 shows a control process for a control dial in accordance with one example embodiment of the present invention.

### Detailed Description

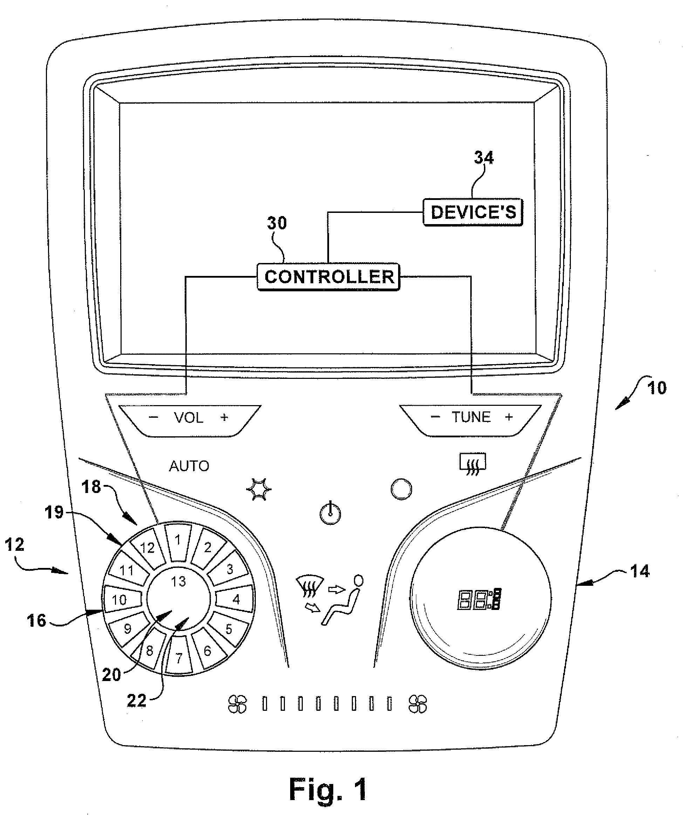

Referring to Fig. 1 , a control panel 10, such as an environmental control panel for control of vehicle temperature, is shown. The control panel 10 includes a set of control dials 12, 14 made in accordance with one example embodiment of the present invention. The control dials 12 and 14 are described herein for controlling vehicle cabin temperature (driver's side and passenger's side, respectively). The dials 12, 14 are similarly constructed and function similarly. For the purposes of this application, only one control dial will be described in detail.

The use of the control dials 12, 14, although being described by way of an example embodiment for vehicle cabin temperature control, could be used to control other vehicle devices such as a radio, etc. Also, the use of the control dials 12, 14, is not limited to control of an end-user device associated with a vehicle but can be used in any control environment.

The control dial 12 may be circular in shape and mainly flat faced for flush mounting in the vehicle control panel 10. Preferably, the control dial 12 is slightly concave to allow a finger of the operator to move around the dial so as to have a more ergonomic feel. A base portion 16 of the control dial 12 is divided into a plurality of sensor segments 18 (an array of sensors) around the outer periphery 19 of the dial 12. In the example embodiment shown, the dial 12 is divided into twelve equally dispersed segments 18 which are equally spaced and distributed about the outer area or periphery of the dial 12. Any number of segments could be used with more sensors providing more control resolution. A center sensor segment 20 (e.g., a thirteenth segment) is located at substantially the center of the dial 12. The center segment 13 can have several functions. In accordance with one example embodiment of the present invention, the center segment 13 is used for sensing of a finger swipe motion across the dial 12.

The individual segments 18 and 20 of the dial 12 are not visibly apparent to the operator. If the control dial 12 is used in a HVAC application, as in this described example embodiment, an information display device 22 can be located in the dial center. Therefore, the center of the dial has both a sensor segment 20 and a display device 22. The information display device 22 can be used to provide an indication of information (such as the desired cabin temperature setting) that is visible to the user. For example, the center display device 22 can display a desired temperature setting such as 70 degrees, to indicate the desired temperature setting for the side of the vehicle cabin associated with that dial. The center dial display 22 can be any type of known display such as a digital display.

The twelve outer sensor segments 18 and the inner sensor segment 20 are. in . accordance with one example embodiment of the present invention, capacitive sensors. Use of other types of touch sensors is contemplated. Each capacitive sensor segment 18 is slightly circumferentially spaced from the next adjacent sensors on each side so as to be electrically isolated therefrom. The capacitive sensor elements 18 form an array of sensor elements spread around the circumference of the dial 12. The center sensor 20 is also a capacitive sensor that is isolated from the outer sensors 18. The sensors 18, 20 are connected to a controller 30 that is, in turn, controllable connected to an end-user device 34 to be controlled. The controller 30 monitors motion of an operator's finger across and around the dial 12 and controls the end-user device 34, such as heater vent doors, the air conditioner, etc. in response to the monitored finger motion in accordance with a predetermined control process.

In accordance with the example embodiment in which the dials 12, 14 are used for control of a vehicle convenience item such as a HVAC system, the dials 12, 14 may be located on a control panel 10 located near a central front cabin location of the vehicle dash between the driver and passenger. When either the driver or passenger place their associated finger on their associated dial, in accordance with an example embodiment of the present invention, motion of the finger is detected and monitored by the controller 30 and appropriate control action occurs in accordance with a predetermined control process.

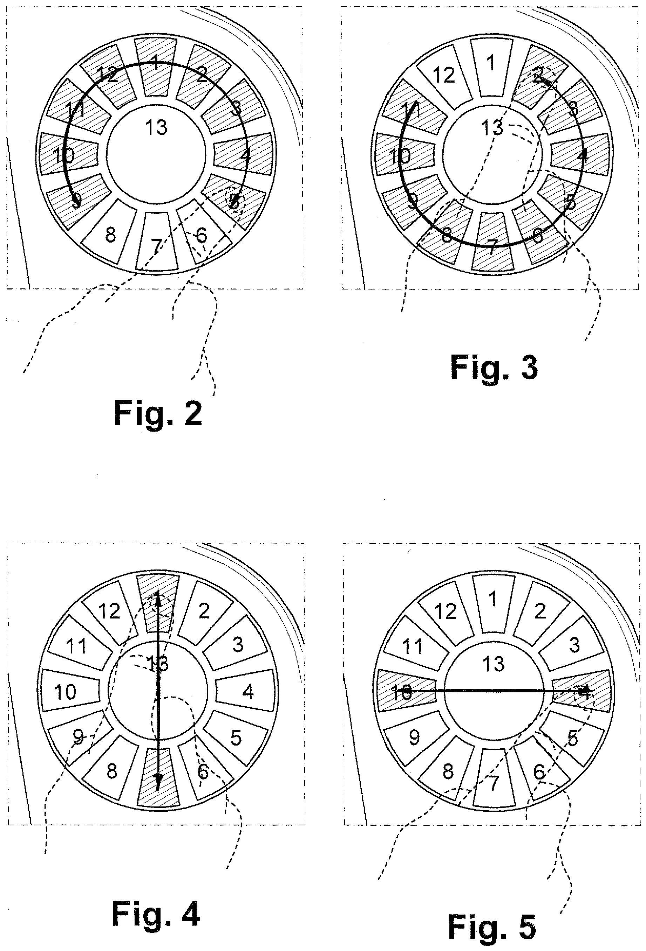

Referring to Figs. 2-5, each of the sensor segments 18, 20 are capacitive type sensors that provide a signal when touched by a user's finger. The user's finger acts as a dielectric. As mentioned, for ergonomic reasons, the dials 12, 14 could be slightly recessed or concave.

Each capacitive sensor segment 18, 20 has an output that is connected to the controller 30. The controller 30 may take the form of a microprocessor or microcomputer, for processing of the sensor output signals and making determinations as to what type of finger motion is occurring. Alternatively, the controller 30 could, be made up of a plurality of specific integrated circuits and discrete components to accomplish the desired function and can be an application specific integrated circuit ("ASIC").

The controller 30 tracks a specific pattern of motion (finger movement) on the dial 12 and also monitors for taping motion of the finger on the dial 12. Specifically, the controller 30 determines if the user is (1) rotating his finger clockwise or counterclockwise around the dial, i.e., around the plurality of segments 18, (2) swiping his finger across or up-and-down across the dial, i.e., from one outer periphery segment to another out periphery segment through the center segment, (3) taping on the dial, or (4) providing a "flick-and-spin" or "flick-swipe" motion across the segments of the dial.

Fig. 2 specifically shows a finger motion in a clockwise motion around the outer periphery segments 18 of the dial 12. When the controller 30 determines this type of motion has occurred, temperature (assuming a HVAC system) will be increased. Display values shown on the center display 22 will be increased accordingly.

Fig. 3 specifically shows a finger motion in a counter-clockwise motion around the outer periphery segments 18 of the dial 1.2. When the controller 30 determines this pattern of motion, temperature will be decreased. Display values shown on the display 22 will be decreased accordingly.

Fig. 4 specifically shows a finger swipe across the dial 12 from one outer segment to another outer segment through the center sensor segment 20. When the controller 30 determines upward swipe motion, temperature will be jumped-up in value by a predetermined amount, such as five degrees per swipe. Display values shown on display 22 will be increased accordingly. When the controller 30 determines downward swipe motion, temperature will be jumped-down in value by a predetermined amount, such as five degrees per swipe. Display values shown on display 22 will be decreased accordingly.

Fig. 5 specifically shows a finger swipe side-to-side from one outer segment to another outer segment across the center segment of the dial 12. When the controller 30 determines this side-to-side motion, the controller can, optionally, control up and down temperature jumps by predetermined amounts (optional to up-and-down swipes) as described with reference to Fig. 4.

The controller 30 controls the center dial display 22 commensurate with the finger motion on the dial 12 in accordance with a predetermined control process as described with reference to Figs. 2-5. Rotating the finger clockwise around the dial will cause the display to commensurately increase display values to indicate the desired temperature setting that the operator desires. Rotating the finger counterclockwise around the dial will cause the display to commensurately decrease display values to indicate the desired temperature setting that the operator desires. Cross- swipes (up/down, left/right) jumps the display temperature values by a predetermined amount, e.g., 5 degrees up/down. In response to the finger motions, not only does the controller 30 control the display device, it also controls the end-user device commensurately to achieve the operator desired temperature setting.

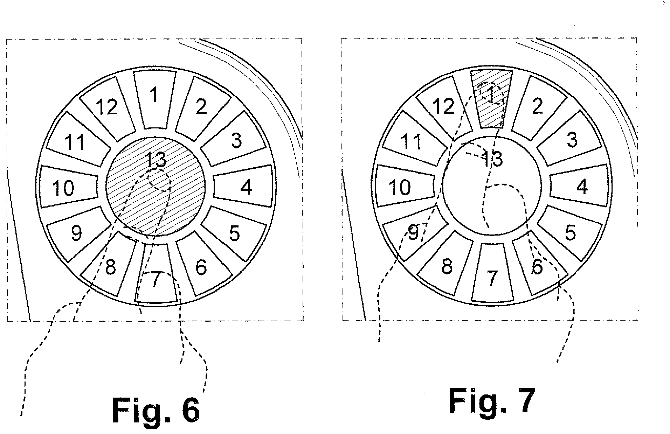

Referring to Fig. 6, a single tap to the center sensor 20 by the operator's finger can result in any desired control of the system. Pressing and holding the center sensor 20 can also result in any desired control. For example, taping the center sensor can be used to change the display units between Fahrenheit and Celsius readings.

Fig. 7 depicts a signal tape of the operator's finger on the dial near the top of the dial which the controller 30 can sense and provide desired control such as increasing temperature (and display value) one degree at a time (one degree per tap).

Pressing and holding a sensor segment, such as near the top of the dial 12, can advance the desired temperature quickly one degree at a time. Similarly, pressing and holding the bottom segment of the dial 12 can decrease the desired temperature setting accordingly.

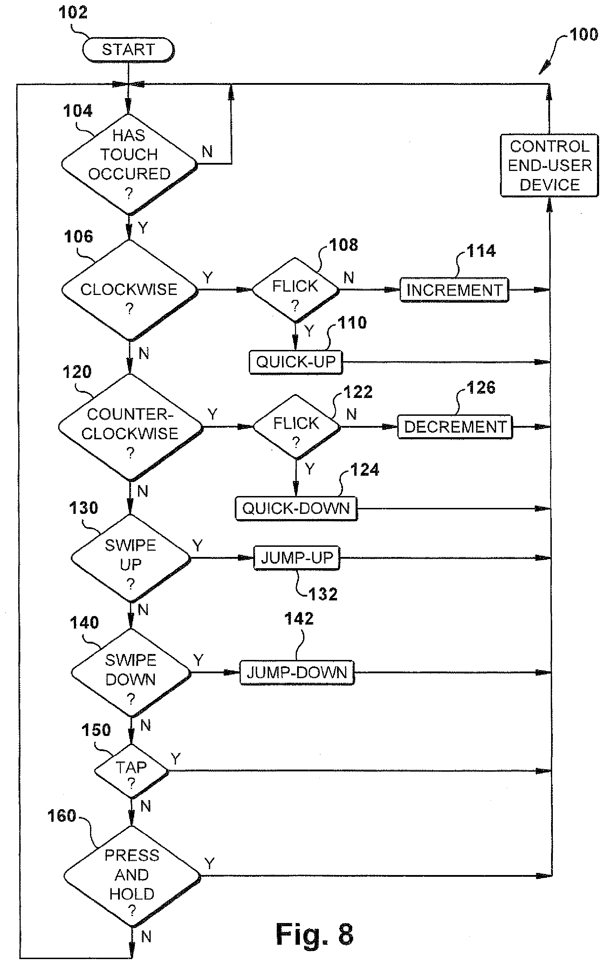

Referring to Fig. 8, a control process 100, in accordance with an example embodiment, for using a control dial of the present invention is shown. The control process 100 is for one control dial. If multiple dials are used, a control process would be provided for each dial. The control process 100 starts at step 102 where initial flags are set, memories cleared, and initial control conditions are set. In step 104, a determination is made as to whether a finger touch to the dial has been sensed, i.e., whether any of the plurality of control dial sensors is providing a signal indicating contact by an operator's finger. If the determination in step 104 is negative, the process loops back until an affirmative determination is made.

If the determination in step 104 is affirmative, the process proceeds to step 106 where a determination is made as to whether a clockwise finger motion has been detected around the plurality of outer periphery sensors 18. If the determination in step 106 is affirmative, the process proceeds to step 108 where a determination is made as to whether the clockwise finger motion is a finger-flick motion, i.e., rapid clockwise rotation. If the determination in step 108 is affirmative, the display 22 is quickly incremented according to the degree and speed of the sensed flick motion in process step 1 10. The controller 30 then controls the end user device accordingly in step 112, i.e., control the end user device 34 to increase the cabin temperature to correspond to the temperature setting value set on the display 22. The process then returns to step 104. if the determination in step 108 is negative, the display 22 is incremented commensurate with the finger motion movement in step 1 14. The controller 30 controls the end-user device 34 in step 1 12 commensurate with the value set on the display 22.

If the determination in step 106 is negative, the process proceeds to step 120. In step 120, a determination is made as to whether a counter-clockwise motion has been detected. If the determination in step 120 is affirmative, the process proceeds to step 122 where a determination is made as to whether the counter-clockwise finger motion is a finger- flick motion, i.e., rapid counter-clockwise rotation. If the determination in step 122 is affirmative, the display 22 is quickly decremented according to the degree and speed of the flick motion in process step 124. The controller 30 then controls the end-user device 34 accordingly in step 112 so as to decrease the cabin temperature commensurate with the value on the display 22. The process then returns to step 104. If the determination in step 122 is negative, the display 22 is decremented slowly following the finger motion movement in step 126 and the controller 30 controls the end-user device 34 in step 1 32 so that the cabin temperature is commensurate with the display value.

If the determination in step 120 is negative, the process proceeds to step 130. In step 130, a determination is made as to whether a swipe-up motion has been detected. Recall that a swipe motion is type of finger motion across the dial as depicted in Fig. 4. If the determination in step 130 is affirmative, the process proceeds to step 132 where the display value shown on display 22 is jumped-up a predetermined amount, e.g., five degrees/per swipe, The controller 30 then controls the end-user device 34 accordingly in step 1 12 and the process then returns to step 104.

If the determination in step 130 is negative, the process proceeds to step 140. In step 140, a determination is made as to whether a swipe-down motion has been detected. If the determination in step 140 is affirmative, the process proceeds to step 142 the display value shown in display 22 is jumped-down a predetermined amount, e.g., five degrees/swipe. The controller controls the end user device accordingly in step 1 12 and the process then returns to step 104.

If the determination in step 140 is negative, the process proceeds to step 150. In step 150, a determination is made as to whether a tape to the center of the control dial, i.e., sensor segment 20, has been detected. If the determination in step 150 is affirmative, the controller controls the display 22 so as display values such as between Fahrenheit or Celsius. Any adjustments are then made to the end-user deivce, if necessary, in step 1 12 and the process then returns to step 104. As mentioned, taps to the upper or lower portion of the dial can be sensed and temperature values incremented or decremented accordingly.

If the determination in step 150 is negative, the process proceeds to step 160. In step 160, a determination is made as to whether a press and hold to any portion of the control di al has been detected. If the determination in step 160 is affirmative, the controller 30 controls the end user device in step 1 12 in accordance with any desired manner and/or the dial 12, e.g.. incrementing or decrementing temperature values until the "hold" s released. The control process then returns to step 104.

The desired control process 100 followed by the controller 30 in response to finger movements, swipes (up, down, left, right), flicks, taps and/or press and holds on the dial can be those described or any other desired end-user device response. Also, the function of the dials 12, 14 can be changed such as controlling vehicle cabin temperature, controlling fan speeds, controlling radio volume and/or radio stations. A function control button on the control panel, such as radio volume, radio station, fan speed, etc. could be provided so that when such function control button is tapped, the controller 30 will switch the control function of the dial so as to control a commensurate end-user control device associated with that dial accordingly.

Alternatively, the dials 1.2, 14 could be single purpose control dials so as to control only a single device such as the HVAC system for an associated side of the vehicle.

From the above description of the invention, those skilled in the art will perceive improvements, changes and modifications. The control dial of the present invention and the control process in accordance with the present invention can be used to replace any mechanical rotary control knob whether in a vehicle system or any non-vehicle system.

## Claims

1. A circular control dial (12, 14) comprising:
an array of spaced sensor elements (18, 20) including a plurality of sensor elements (18) circumferentially spaced around the dial (12, 14), and a center sensor element (20) located at substantially the center of the dial (12, 14);
a display (22) located within the dial (12, 14) for displaying a desired control value; and
a controller (30) connected to said plurality of sensor elements (12, 14) and to the display (22) for controlling a vehicle heating, ventilating, and air conditioning system, said controller (30) being configured to:
monitor the array of spaced sensor elements (18, 20) to determine a user desired command based on user touches to the array of spaced sensor elements (18, 20);
control the display (22) and the vehicle heating, ventilating, and air conditioning system commensurate with the determined user desired command;
wherein said control dial (12, 14) is configured to control said vehicle heating, ventilating, and air conditioning system, in accordance with the user determined desired command; and
wherein the controller (30) is configured to monitor the array of spaced sensor elements (18, 20) for swiping finger motion from one outer sensor element (18) to another outer sensor element (18) across the center sensor element (20) to determine a user desired temperature change by a predetermined incremental amount.

2. The control dial (12, 14) of claim 1 wherein the display (22) is located at substantially the center of the dial (12, 14).

3. The control dial (12, 14) of claim 1 or 2 wherein said array of spaced sensor elements (18, 20) are capacitive sensors.

4. The control dial (12, 14) of any one of the preceding claims, wherein said controller (30) monitors the array of spaced sensor elements (18, 20) for clockwise and counter-clockwise finger motion across the array of spaced sensor elements (18, 20) so as to determine a user desired temperature increase for clockwise finger movement and determine a user desired temperature decrease for counter-clockwise finger movement.

5. The control dial (12, 14) of any one of the preceding claims, wherein said, controller (30) is configured to monitor the array of spaced sensor elements (18, 20) for clockwise and counter-clockwise finger flick motion across the array of spaced sensor elements (18, 20) so as to determine a user desired predetermined incremental temperature increase for clockwise finger flick movement and determine a user desired predetermined incremental temperature decrease for counter-clockwise finger flick movement.

6. The control dial (12, 14) of any one of the preceding claims, wherein said controller (30) is configured to monitor the array of spaced sensor elements (18, 20) for a finger tap to the array of spaced sensor elements (18, 20) so as to determine a user desired function responsive to the finger tap.

7. A method for controlling an end user device (34) using a circular control dial (12, 14) comprising: a plurality of sensor elements (18) in an array circumferentially spaced around the dial (12, 14), a center sensor element (20) located at substantially the center of the dial (12, 14), a display (22) located within the dial (12, 14) for displaying a desired control value and a controller (30) connected to said plurality of sensor elements (18), said center sensor element (20) and to the display for controlling a vehicle heating, ventilating, and air conditioning system, the method comprising the steps of:
displaying within the dial (12, 14) a desired control value; and controlling the vehicle heating, ventilating and air conditioning system by monitoring the array of spaced sensor elements (18) for swiping finger motion from one outer sensor element (18) to another outer sensor element (18) across the center sensor element (20), determining a user desired temperature change by a predetermined incremental amount based on user touches to the array of spaced sensor elements (18), and controlling the display (22) and the vehicle heating, ventilating and air conditioning system commensurate with the determined user desired command.

## Patentansprüche

1. Kreisrunder Drehregler (12, 14), der Folgendes umfasst:
eine Anordnung von im Abstand angeordneten Sensorelementen (18, 20) mit einer Vielzahl von Sensorelementen (18), die im Abstand um den Drehregler (12, 14) herum angeordnet sind, und ein mittleres Sensorelement (20), das sich im Wesentlichen in der Mitte des Drehreglers (12, 14) befindet;
ein Display (22), das sich innerhalb des Drehreglers (12, 14) befindet, um eine gewünschte Stellgröße anzuzeigen; und
eine Steuereinheit (30), die mit der Vielzahl von Sensorelementen (12, 14) und mit dem Display (22) verbunden ist, um ein Fahrzeugheiz-, Belüftungs- und Klimatisierungssystem zu steuern, wobei die Steuereinheit (30) dazu ausgebildet ist:
die Anordnung von im Abstand angeordneten Sensorelementen (18, 20) zu überwachen, um anhand von Berührungen eines Benutzers auf der Anordnung von im Abstand angeordneten Sensorelementen (18, 20) einen vom Benutzer gewünschten Befehl zu ermitteln;
das Display (22) und das Fahrzeugheiz-, Belüftungs- und Klimatisierungssystem entsprechend dem ermittelten, vom Benutzer gewünschten Befehl zu steuern;
wobei der Drehregler (12, 14) dazu ausgebildet ist, das Fahrzeugheiz-, Belüftungs- und Klimatisierungssystem gemäß dem ermittelten, vom Benutzer gewünschten Befehl zu steuern; und
wobei die Steuereinheit (30) dazu ausgebildet ist, die Anordnung von im Abstand angeordneten Sensorelementen (18, 20) auf eine Wischbewegung mit dem Finger von einem äußeren Sensorelement (18) zu einem anderen äußeren Sensorelement (18) quer über das mittlere Sensorelement (20) zu überwachen, um eine vom Benutzer gewünschte Temperaturänderung um einen vorbestimmten inkrementellen Betrag zu ermitteln.

2. Drehregler (12, 14) nach Anspruch 1, wobei sich das Display (22) im Wesentlichen in der Mitte des Drehreglers (12, 14) befindet.

3. Drehregler (12, 14) nach Anspruch 1 oder 2, wobei es sich bei der Anordnung von im Abstand angeordneten Sensorelementen (18, 20) um kapazitive Sensoren handelt.

4. Drehregler (12, 14) nach einem der vorhergehenden Ansprüche, wobei die Steuereinheit (30) die Anordnung von im Abstand angeordneten Sensorelementen (18, 20) auf eine Fingerbewegung im Uhrzeigersinn und gegen den Uhrzeigersinn quer über die Anordnung im Abstand angeordneten Sensorelementen (18, 20) überwacht, um einen vom Benutzer gewünschte Temperaturanstieg bei einer Fingerbewegung im Uhrzeigersinn und eine vom Benutzer gewünschte Temperatursenkung bei einer Fingerbewegung gegen den Uhrzeigersinn zu ermitteln.

5. Drehregler (12, 14) nach einem der vorhergehenden Ansprüche, wobei die Steuereinheit (30) dazu ausgebildet ist, die Anordnung von im Abstand angeordneten Sensorelementen (18, 20) auf eine Schnippbewegung mit dem Finger im Uhrzeigersinn und gegen den Uhrzeigersinn quer über die Anordnung von im Abstand angeordneten Sensorelementen (18, 20) zu überwachen, um einen vom Benutzer gewünschten vorbestimmten inkrementellen Temperaturanstieg bei einer Schnippbewegung mit dem Finger im Uhrzeigersinn und eine vom Benutzer gewünschte Temperatursenkung bei einer Schnippbewegung mit dem Finger gegen den Uhrzeigersinn zu ermitteln.

6. Drehregler (12, 14) nach einem der vorhergehenden Ansprüche, wobei die Steuereinheit (30) dazu ausgebildet ist, die Anordnung von im Abstand angeordneten Sensorelementen (18, 20) auf ein Tippen mit dem Finger auf die Anordnung von im Abstand angeordneten Sensorelementen (18, 20) zu überwachen, um eine vom Benutzer gewünschte Funktion in Reaktion auf das Tippen mit dem Finger zu ermitteln.

7. Verfahren zum Steuern eines Endbenutzergeräts (34) unter Verwendung eines kreisrunden Drehreglers (12, 14), der Folgendes umfasst: eine Vielzahl von Sensorelementen (18) in einer Anordnung, die im Abstand um den Drehregler (12, 14) herum angeordnet sind, ein mittleres Sensorelement (20), das sich im Wesentlichen in der Mitte des Drehreglers (12, 14) befindet, ein Display (22), das sich in dem Drehregler (12, 14) befindet, um eine gewünschte Stellgröße anzuzeigen, und eine Steuereinheit (30), die mit der Vielzahl von Sensorelementen (18), dem mittleren Sensorelement (20) und mit dem Display verbunden ist, um ein Fahrzeugheiz-, Belüftungs- und Klimatisierungssystem zu steuern, wobei das Verfahren die folgenden Schritte umfasst:
Anzeigen einer gewünschten Stellgröße innerhalb des Drehreglers (12, 14); und Steuern des Fahrzeugheiz-, Belüftungs- und Klimatisierungssystems durch Überwachen der Anordnung von im Abstand angeordneten Sensorelementen (18) auf eine Wischbewegung mit dem Finger von einem äußeren Sensorelement (18) zu einem anderen äußeren Sensorelement (18) quer über das mittlere Sensorelement (20), Ermitteln einer vom Benutzer gewünschten Temperaturänderung um einen vorbestimmten inkrementellen Betrag anhand von Berührungen des Benutzers auf der Anordnung von im Abstand angeordneten Sensorelementen (18) und Steuern des Displays (22) und des Fahrzeugheiz-, Belüftungs- und Klimatisierungssystems entsprechend dem ermittelten, vom Benutzer gewünschten Befehl.

## Revendications

1. Cadran de réglage circulaire (12, 14), comprenant :
un agencement d'éléments de détection espacés (18, 20) présentant une pluralité d'éléments de détection (18) circonférentiellement espacés autour du cadran (12, 14), et un élément de détection médian (20) agencé sensiblement au centre du cadran (12, 14) ;
un écran (22) agencé dans le cadran (12, 14) pour afficher une valeur de réglage souhaitée ; et
une unité de commande (30) reliée à la pluralité d'éléments de détection (12, 14) et à l'écran (22) pour la commande d'un système de chauffage, de ventilation et de climatisation de véhicule, l'unité de commande (30) étant réalisée de manière :
à surveiller l'agencement d'éléments de détection espacés (18, 20) pour déterminer une commande souhaitée par l'utilisateur sur la base de contacts de l'utilisateur sur l'agencement d'éléments de détection espacés (18, 20) ;
à commander l'écran (22) et le système de chauffage, de ventilation et de climatisation de véhicule conformément à la commande souhaitée par l'utilisateur telle que déterminée ;
le cadran de réglage (12, 14) étant réalisé de manière à régler le système de chauffage, de ventilation et de climatisation de véhicule selon la commande souhaitée par l'utilisateur telle que déterminée ; et
l'unité de commande (30) étant réalisée de manière à surveiller l'agencement d'éléments de détection espacés (18, 20) quant à un mouvement de glissement du doigt d'un élément de détection extérieur (18) à un autre élément de détection extérieur (18) en passant par l'élément de détection médian (20) pour déterminer un changement de température souhaité par l'utilisateur d'un montant incrémentiel prédéterminé.

2. Cadran de réglage (12, 14) selon la revendication 1, l'écran (22) étant agencé sensiblement au centre du cadran (12, 14).

3. Cadran de réglage (12, 14) selon la revendication 1 ou 2, l'agencement d'éléments de détection espacés (18, 20) étant des capteurs capacitifs.

4. Cadran de réglage (12, 14) selon l'une des revendications précédentes, l'unité de commande (30) surveillant l'agencement d'éléments de détection espacés (18, 20) quant à un mouvement du doigt dans le sens des aiguilles d'une montre et dans le sens contraire des aiguilles d'une montre sur l'agencement d'éléments de détection espacés (18, 20) pour déterminer une hausse de température souhaitée par l'utilisateur dans le cas d'un mouvement du doigt dans le sens des aiguilles d'une montre, et déterminer une baisse de température souhaitée par l'utilisateur dans le cas d'un mouvement du doigt dans le sens contraire des aiguilles d'une montre.

5. Cadran de réglage (12, 14) selon l'une des revendications précédentes, l'unité de commande (30) étant réalisée de manière à surveiller l'agencement d'éléments de détection espacés (18, 20) quant à un mouvement de claquement du doigt dans le sens des aiguilles d'une montre et dans le sens contraire des aiguilles d'une montre sur l'agencement d'éléments de détection espacés (18, 20) pour déterminer une hausse de température incrémentielle prédéterminée souhaitée par l'utilisateur dans le cas d'un mouvement de claquement du doigt dans le sens des aiguilles d'une montre, et déterminer une baisse de température incrémentielle prédéterminée souhaitée par l'utilisateur dans le cas d'un mouvement de claquement du doigt dans le sens contraire des aiguilles d'une montre.

6. Cadran de réglage (12, 14) selon l'une des revendications précédentes, l'unité de commande (30) étant réalisée de manière à surveiller l'agencement d'éléments de détection espacés (18, 20) quant à un appui avec le doigt sur l'agencement d'éléments de détection espacés (18, 20) pour déterminer une fonction souhaitée par l'utilisateur en réponse à l'appui avec le doigt.

7. Procédé de commande d'un dispositif d'utilisateur final (34) en utilisant un cadran de réglage circulaire (12, 14), comprenant : une pluralité d'éléments de détection (18) selon un agencement et circonférentiellement espacés autour du cadran (12, 14), un élément de détection médian (20) agencé sensiblement au centre du cadran (12, 14), un écran (22) agencé dans le cadran (12, 14) pour afficher une valeur de réglage souhaitée, et une unité de commande (30) reliée à la pluralité d'éléments de détection (18), à l'élément de détection médian (20) et à l'écran pour la commande d'un système de chauffage, de ventilation et de climatisation de véhicule, le procédé comprenant les étapes suivantes :
afficher, dans le cadran (12, 14), une valeur de réglage souhaitée; et commander le système de chauffage, de ventilation et de climatisation de véhicule en surveillant l'agencement d'éléments de détection espacés (18) quant à un mouvement de glissement du doigt d'un élément de détection extérieur (18) à un autre élément de détection extérieur (18) en passant par l'élément de détection médian (20), déterminer un changement de température souhaité par l'utilisateur d'un montant incrémentiel prédéterminé sur la base de contacts de l'utilisateur sur l'agencement d'éléments de détection espacés (18), et commander l'écran (22) et le système de chauffage, de ventilation et de climatisation de véhicule conformément à la commande souhaitée par l'utilisateur telle que déterminée.
